# EUROPEAN PATENT SPECIFICATION

(11) **EP 2 416 535 B1**
(45) Date of publication and mention of the grant of the patent: **18.09.2013**
(21) Application number: 11175504.7
(22) Date of filing: 27.07.2011
(51) Int. Cl.: H04L 25/14, H04J 3/16

(54) **Demultiplexing or multiplexing method for transmitting/receiving digital data on transmission channels with an assigned capacity**
Multiplex- oder Demultiplexverfahren zum Senden bzw. Empfangen von digitalen Daten über Übertragungskanäle mit zugewiesener Kapazität
Procédé de multiplexage ou démultiplage pour émettre ou recevoir des données numériques sur des canaux de transmission à capacité assignée

(30) Priority: 03.08.2010 IT MI20101467
(43) Date of publication of application: 08.02.2012
(73) Proprietor: SIAE Microelettronica S.p.A., 20093 Cologno Monzese (MI) (IT)
(72) Inventor: Cucchi, Daniele, 20093 COLOGNO MONZESE (IT); Pulzoni, Roberto, 20093 COLOGNO MONZESE (IT)
(74) Representative: Raimondi, Margherita

(56) References cited:
- US-A- 3 982 074
- US-A1- 2006 029 006

## Description

The present invention relates to a method for the coordinated use of a plurality of transmission channels for digital signals supplied with the single digital flows having a size greater than the transmission capacity of each single channel, but not greater than the sum of the capacities of the single channels.

It is known, in the technical sector of digital transmission, as for example in the case of digital radio relays, that the connection between two stations, i.e. transmitting station TX and receiving station RX, may be performed using a certain number of transmission channels in parallel and that this use of several channels allows an increase in both the transmission capacity and the availability of the connection, while also reducing the possibility of the connection being interrupted.

In this respect, the management of the channels may be performed in different ways, keeping for example several channels active and one or more reserve channels available, to be used in the case where one or more of the active channels is no longer able to transmit correctly.

It is also known that, in this configuration, the channels operate in so-called ON/OFF mode, which allows transmission of the data flow for as long as each channel is able to transmit at the nominal speed, with a transmission quality as per specification, while the channel is switched off and replaced by a reserve channel, if the quality of the channel falls below a certain threshold (for example owing to atmospheric agents such as rain or owing to multiple-trajectory paths) and the channel no longer manages to transmit at the nominal speed and with the required quality.

Although performing its function, this technique of managing the transmission channels has a number of drawbacks including:
- the failure to make use of the total capacity also in the case of optimum transmission conditions, owing to the need to keep in any case one or more reserve channels inactive;
- the long downtime of the channels, resulting also from the time needed to restore synchronization between transmitter and receiver when the channel is switched on again after being switched off.

Also known are techniques designed to solve the aforementioned problems and increase the efficiency of the transmission system as a whole and for example consisting in using all the available channels, without leaving one (or more) of them as reserve channels, and in performing continuous transmission, while reducing the transmission speed and therefore the transmission capacity, when the quality of a connection deteriorates; it is possible in these cases, for example, to make use of the Adaptive Coding and Modulation technique (ACM) and/or change the error correction algorithms, thus increasing the correction capacity and enabling at all times the use of all the channels of the transmission system even in the case of an inferior quality of the connection, albeit with a reduced capacity.

Another known case where a connection is performed on several physical channels in parallel in order to obtain a higher transmission capacity is that of Ethernet connections which use the protocol 802.3ad (known as link aggregation).

With this technique it is possible to use several links in parallel in order to perform a higher capacity connection with each single link, without having to change the physical interfaces of the apparatus (routers or switches).

Examples of the prior art are described in US 2006/029006 and US 3,982,074

Said known techniques, although performing their function, are not however optimized for the management of the transmission channels in cases where there are variations in the transmission speed and the number of channels available for the connection and/or other types of protocol used; this is because they presuppose the use of specific technology (for example the use of Ethernet) and generally require complex procedures and the exchange of a lot of information between the various parties involved in the connection, thus creating problems associated with the high cost of implementation in order to obtain the required solution, but also with the intrinsic limitations, such as the fact that it is not possible to bundle freely several types of traffic, for example of the ON/OFF type and different types.

The IEEE 802.3ad standard deals in fact with the problem of how to divide up among several links an Ethernet data flow and reconstruct it at the end, this technique, however, only being applicable to Ethernet.

The technical problem which is posed, therefore, is to develop a method which is able to use in a coordinated manner a set of digital transmission channels, each with an assigned nominal capacity, in order to provide data transmission where:
- the overall transmission capacity is maximized, exploiting in the best possible manner the capacity of each channel;
- the system is able to perform transmission without having to know the type of information conveyed or the protocol used in the conveyed signal;
- the overall latency introduced by the transmission during transit of the information flow is minimized;
- the latency is uniform for all the information components which pass through the system and there is no irregularity owing to the use of different transmission channels with a different transmission capacity which may also vary over time;
- the method requires a minimum exchange of information both between the transmitter and the source of the signal to be transmitted and between the receiver and the transmitter in the transmission system, one part of said information representing the transmission capacity available depending on the quality of each channel;
- the available capacity, even though variable, of each channel is always fully used.

In connection with this problem it is also required that this method should be easy to implement so as to allow a reduction in the circuitry and a consequent reduction in the corresponding production costs of the apparatus for implementing the method.

These results are achieved according to the present invention by a demultiplexing or multiplexing method for transmitting/receiving a flow of digital data on/from transmission channels with an assigned capacity, according to the characteristic features of Claim 1.

Further details may be obtained from the following more detailed description of a non-limiting example of embodiment of a concatenation method according to the present invention provided with reference to the accompanying drawings in which:
- Figure 1:: shows a summary block diagram of an example of a transmission structure to which the method according to the present invention is applied; and
- Figure 2:: shows an example of the table of values assumed by the variables according to Example 1 of the method according to the invention; and
- Figure 3:: shows an example of the table of values assumed by the variables according to Example 2 of the method according to the invention.

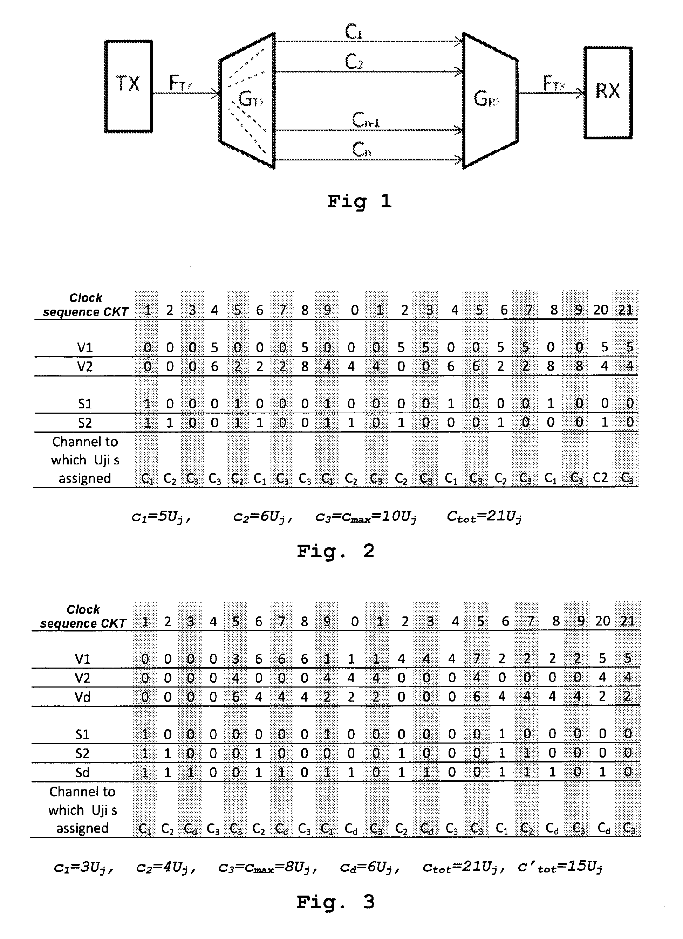

With reference to Figure 1 which shows in schematic form the general structure of a transmission system, comprising:
- at least one source TX able to generate a digital flow F_{TX} and a receiver RX;
- a plurality of digital transmission channels Cᵢ, each with a nominal capacity Cᵢ such that the capacity of the flow F_{TX} is not greater than the total known capacity C_{TOT} =C₁+C₂+ ... +Cₙ of the transmission channels Cᵢ;
- at least one transmission management apparatus GTX, which must distribute the flow F_{TX} on the channels Cᵢ, and at least one reception management apparatus GRX which has the function of receiving the flows from the channels Ci and multiplexing them so as to reconstruct the original flow F_{TX};

Assuming firstly, for the purposes of the present description, the following definitions:
- basic unit Uj =: the basic data of the flow F_{tX} entering GTX, which may be expressed in bits, nibbles, bytes or multiples of a byte; each Uj is assigned to one of the N channels Cᵢ for the purposes of transmission;
- time unit T =: a predefined time interval, during which each channel Cᵢ transmits a number of basic units Uj equal to its existing capacity Cᵢ;
- time unit clock: CKU = the clock which synchronizes each time unit;
- transition clock CKT =: clock, submultiple of the time unit clock, which synchronises loading of a basic unit of the flow Fₜₓ on one of the N transmission channels Cᵢ; *CKT* = *C_{TOT}* / T
the flow F_{TX} has, in a given time unit T, a quantity of basic units (bits, bytes, nibbles, etc. ) (C_{TOT}*U_{J}) equal to the sum of the capacities of the single channels, for the same time unit;
the method according to the present invention for transmission of the flow F_{TX} of data from the source TX on a plurality N of transmission channels Cᵢ, comprises the following steps:
- identifying the channel (Cₘₐₓ) with the greater nominal capacity (Cₘₐₓ); in the case of several channels Ci with the same maximum capacity, one to be used as channel Cₘₐₓ is chosen at random and the remaining channels Cᵢ are treated as having the same capacity as the channels with a lower capacity;
- defining N-1=M status counters (Vᵢ), each associated with an associated channel Cᵢ except for the channel (Cₘₐₓ) with maximum capacity (Cₘₐₓ);
- defining N-1=M status variables (Sᵢ), each associated with an associated channel (Cᵢ) except for the channel (Cₘₐₓ) with maximum capacity (Cₘₐx) ; defining an overflow value OF = Cₘₐₓ;
- initializing the system at a time unit clock CKU setting:
   all the status counters Vᵢ to 0 and
   all the status variables Sᵢ to 1, and, taking account of the need for individual variations during the intervals of the transition clocks CKT so that the transition occurs at the next transition clock edge CKT,
   the following steps are then performed:
- extracting at each transition clock CKT the basic unit of current information Uj from the flow Fₜₓ and:
- if a status variable Sᵢ is equal to 1, assigning the basic unit of current information Uj to the corresponding channel Cᵢ for transmission;
- Sᵢ is set to 0;
- if, several status variables Sᵢ are simultaneously equal to 1, a hierarchical rule for choice, for example based on the increasing index values "i", is defined;
- if all the status variables are equal to zero (Si=0), activating the channel with maximum capacity (C_{maX}), which is not associated with any status variable Sᵢ, assigning the basic unit Uj to the channel Cₘₐₓ and incrementing each status counter Vᵢ by a value equal to its corresponding value C_{i;} obtaining a result Rᵢ = Vᵢ + Cᵢ;
   *) for each status counter Vᵢ which reaches, or exceeds, the overflow value OF = (Cₘₐₓ) :
- the corresponding status variable Sᵢ is set to 1 and the calculated value VC=(Rᵢ-Overflow) is entered into the counter Vᵢ;
- at the next transition clock CKT, repeating the sequence, extracting the next basic unit of information Uⱼ₊₁ from the flow Fₜₓ and activating the channel Cᵢ, on the basis of the current status variables Sᵢ;
   *) if none of the status counters Vᵢ is in the overflow condition, at the next transition clock CKT the sequence is resumed, activating the existing source Cᵢ, on the basis of the existing status variables Sᵢ.

To summarise: at each transition clock edge, a channel Cᵢ is activated depending on the existing values of the status variables Sᵢ and the status counters Vᵢ (resulting from the updates performed during the interval defined by two successive clock edges) and the said variables are recalculated and updated in accordance with the steps of the above-defined method; at the next clock CKT the channel Cᵢ will be activated depending on the new values of the variables (Sᵢ, Vᵢ) and recalculation and updating of said variables will be repeated.

### EXAMPLE 1

The method was tested by simulating three channels C₁,C_{2,}C₃ respectively:
C₁ with transmission capacity C₁=5,
C₂ with transmission capacity C₂=6,
C₃ with transmission capacity C₃=10.
this will therefore give N=3 and a total transmission capacity Cₜₒₜ=C₁+C₂+C₃ = 21 basic units Uj in the time unit T;
with M=N-1=3-1=2 the following variables are defined:
V₁: status counter for source 1
V₂ : status counter for source 2
S₁ : status variable for source 1
S₂ : status variable for source 2
Overflow = C_{maX} = 10

Fig. 2 shows the table of values assumed by the status variables S₁, S₂, by the status counters V₁, V2 and by the channel Cᵢ which is served at each transition clock CKT during the course of a time unit T.

It can be noted that, at each time unit T, 21 basic units Uj are automatically assigned exactly in the same order; this therefore gives a frame structure TM with length Cₜₒₜ * Uⱼ which is transmitted in each time unit T with the repetitive assignment of the various units Uj to the said transmission channels Cᵢ.

According to the invention it is envisaged moreover that on the Receiving side Rx, the GRX apparatus need not be informed in advance of the structure of the frame TM in order to obtain reconstruction of the flow Fₜₓ with the data from the different channels Cᵢ; in fact it is sufficient for the GRX apparatus during reception to know the same information used during transmission:
- frequency of transition clock CKT and time unit clock CKU;
- number N of channels Cᵢ;
- capacity Cᵢ of each channel Cᵢ;

in order to be able to apply correctly the same procedure used for transmission and extract (instead of inserting) the basic units Uj from the various channels Cᵢ, reconstructing the starting flow Fₜₓ.

Since the maximum transmission capacity C'ᵢ of each channel Cᵢ may be reduced, also temporarily, with respect to its maximum possible value Cᵢ, the total capacity C'_{TOT} will be correspondingly reduced compared to the value C_{TOT}, (C' TOT ≤ C_{TOT}) .

In these conditions, the quantity of information generated by the transmitter Tx must also be reduced by the same amount, generating a reduced flow F'_{Tx}.

However, if the transition clock CKT and the time unit clock CKU are to be kept unchanged, in order to ensure simplification of the circuit, the method envisages the creation of a dummy channel C_{d} with a capacity C_{d}=C_{TOT}-C'_{TOT} to which, according to the method, C_{d} dummy basic units U_{jd}, without any information, are assigned, in order to maintain an apparent constant flow F_{Tx}.

In detail, in order to kept unchanged the apparent flow F_{TX} and the clock CKT, the following steps of the method according to the invention are envisaged:
- defining a dummy channel C_{d} with a transmission capacity C_{d} equal to the difference between the overall maximum capacity of the transmission channels and the overall reduced existing capacity C'_{TOT}, i.e. C_{d} = C_{TOT} - C'_{TOT};
- using C_{d} dummy basic units U_{jd}, assigned to the channel C_{d}, at C_{d} transitions of CKT, according to the steps of the method.

In other words, at the C_{d} edges of the transition clock CKT corresponding to the channel C_{d} no unit U_{jd} is assigned to any physical channel Cᵢ, but the values of the status Sᵢ and the status counters Vᵢ are merely updated according to the general method for the next transition clock.

In this way, the flow containing real information is reduced (F'_{TX} < F_{Tx}), but both the transition clock CKT and the time unit clock CKU remain unchanged, thus favouring simplification of the circuit.

In a similar manner during reception, GRX uses the same procedure, employing only the same information used during transmission for multiplexing the said flow (Fₜₓ) on the channels (Cᵢ) and composed of:
- basic unit (Uj), transition clock frequency CKT, time unit (T) and time unit clock CKU;
- number N of channels Cᵢ
- capacity Cᵢ of each channel Cᵢ;

in order to demultiplex the signals from the different channels Cᵢ and reconstruct the flow F'_{TX}, extracting the units Uj from the various channels Cᵢ in accordance with the method according to the invention and without performing actions for any dummy units U_{jd} upon reception from the dummy channel C_{d}. Basically, at the C_{d} clock edges CKT for the channel C_{d} no basic units are extracted from any channel Cᵢ, but the values of the status variables Sᵢ and the status counters Vᵢ according to the general method are updated.

In the event of interruption - also temporary in nature - of a channel Cᵢ, it may be treated as a particular instance of reduction of the transmission capacity, creating a dummy channel C_{d} with a capacity C_{d} equal to the capacity Cᵢ of the channel which is not working.

### EXAMPLE 2

With reference to Example 1 it can be imagined that the capacities of the three channels may change from Cᵢ=5 C₂=6, C₃=10 to respective new lower values, for example C₁=3_{Uj} C₂=4Uⱼ, C₃=8Uⱼ=Cₘₐₓ; in this case, since C'_{TOT}=C₁+C₂+C₃=15Uⱼ, the dummy channels C_{D} with capacity C_{d} equal to (C_{TOT}=21)-(C'_{TOT}=13)=6Uⱼ is created.

In this way the apparent overall capacity of the transmission channels is always 21 and, as can be verified from the Table in Fig. 3, the method is applied without variation.

This dummy channel C_{d} is used within the method exactly in the same manner as a real channel and therefore reserving C_{d}=6Uⱼ empty basic units within the time unit.

During reception, at the corresponding C_{d} transition clock edges, extraction of basic units will not be performed, but the values of the variables and the status counters will be updated according to the general rule.

It is therefore clear how the concatenation method according to present invention allows a flow F_{TX} of digital data to be distributed automatically on N channels Cᵢ which form the transmission medium so that:
- the overall transmission capacity is maximized, because the maximum existing available capacity of each channel Cᵢ is always used;
- the apparatus managing the transmission channels GTX and reception channels GRX requires a reduced amount of information in order to perform the demultiplexing and multiplexing operations, respectively;
- it is not required to define complex tables containing information on the structure for use of the channels and exchange it between transmitting station and receiving station;
- transmission/reception is transparent with respect to the contents of the flow generated by the channel and therefore its internal structure and the protocols used, which therefore do not have to be known by the transmission system;
- the overall latency introduced during transit of the information flow is minimized;
- the latency is uniform for all the information components which pass through the system, namely the jitter during reception delays between the blocks from different physical channels Cᵢ with different capacity Cᵢ, is minimized, all other system parameters being unchanged;
- any (temporary) variations in the capacity of a certain channel, for example reductions due to rain affecting the radio relay connections, are managed simply by calculating the reduced existing value f'<f of the total transmission capacity (=sum of the existing reduced capacities of the single channels) and accepting only flows with a size not greater than said existing maximum capacity; in this case also therefore the maximum use of the band available, the minimum overall latency and the minimum variation (jitter) affecting the signal being received are maintained.

Although described in connection with certain constructional forms and certain preferred examples of embodiment of the invention, it is understood that the scope of protection of the present patent is defined solely by the following claims.

## Claims

1. Demultiplexing or multiplexing method for transmitting/receiving on N channels (Cᵢ) with capacity (cᵢ) a flow (F_{TX}) comprising, in a time unit (T), an assigned quantity of basic units (Uj) of digital signals not greater than the sum (**c**_{TOT}) of the single transmission capacities (cᵢ) of the channels (Cᵢ), **characterized in that** it comprises the following steps:
- defining at least: a basic unit of information (Uj), a time unit (T), a time unit clock (CKU) and a transition clock (CKT);
- identifying the channel (Cₘₐₓ) with maximum capacity (Cₘₐₓ);
- defining N-1=M status counters (Vᵢ), each associated with a corresponding channel **(**Cᵢ**)** except for the channel (Cₘₐₓ) with maximum capacity (Cₘₐₓ);
- defining N-1=M status variables (Sᵢ), each associated with a corresponding channel (Cᵢ) except for the channel (Cₘₐₓ) with maximum capacity (Cₘₐₓ);
- defining an overflow value OF equal to said maximum capacity (OF = Cₘₐₓ);
- initializing the system at a time unit clock (CKU), setting:
all the status counters (Vᵢ) to 0 and
all the status variables (Sᵢ) to 1,
- extracting at each transition clock (CKT) a basic unit (Uj) of current information from the flow (Fₜₓ) and:
- if at least one status variable (Sᵢ) is equal to 1, assigning the basic unit (Uj) of current information to the corresponding channel (Cᵢ) for transmission;
- zeroing the current status variable (Si=0);
- if all the status variables are equal to zero (Sᵢ=0) assigning the current basic unit (Uj) to the channel (Cₘₐₓ) with maximum capacity (cₘₐₓ) and incrementing each status counter (Vᵢ) by a value equal to the corresponding channel capacity value (cᵢ), obtaining a result Rᵢ (Ri = Vᵢ+cᵢ) ;
- for each status counter (Vᵢ) which reaches, or exceeds, the overflow value OF (=cₘₐₓ):
- the corresponding status variable (Sᵢ) is set to 1 and a calculated value VC = Rᵢ-OF is entered into the counter (Vᵢ) ;
- at the next transition clock (CKT), repeating the sequence, extracting the next basic unit (Uⱼ₊ᵢ) of information from the flow (Fₜₓ) and activating a channel (Cᵢ), on the basis of the current status variables (Sᵢ) ;
- if none of the status counters (Vᵢ) is in the overflow condition, at the next transition clock (CKT) the sequence is resumed, activating the current channel (Cᵢ), on the basis of the current status variables (Sᵢ).

2. Method according to Claim 1, **characterized in that**, in the case of several channels **(**Cᵢ**)** with the same maximum capacity (cₘₐₓ), one is chosen to be used as channel (Cₘₐₓ) with maximum capacity; and the remaining channels (Cᵢ) are treated as having the same capacity as channels with lower capacity.

3. Method according to Claim 1, **characterized in that** if several status variables (Sᵢ) are simultaneously equal to 1, a hierarchical rule for selection based on the increasing index values "i" is defined.

4. Method according to Claim 1, **characterized in that** the transmission capacity (c'ᵢ) of each channel (Cᵢ) is reduced with respect to its maximum value (cᵢ) and the total transmission capacity (c'_{TOT}) is less than the maximum possible capacity (c_{TOT}).

5. Method according to Claim 4, **characterized in that** the transition clock (CKT), the time unit (T) and the time unit clock (CKU) are constant.

6. Method according to Claim 5, **characterized in that** it comprises the further steps of:
- defining a dummy channel (C_{d}) with a transmission capacity c_{d} equal to the difference between the overall maximum capacity (cₜₒₜ) of the transmission channels and the current reduced overall capacity (c'_{TOT}) (c_{d}=c_{TOT}-c'_{TOT})
- assigning to the dummy channel (C_{d}) c_{d} dummy basic units (U_{jd}), extracted from the reduced flow (F'_{TX}), at c_{d} transitions of the transition clock (CKT), according to the steps of the method.

7. Use of a demultiplexing or multiplexing method according to Claim 1 for the reconstruction, during reception (GRX), of a flow (Fₜₓ) with the data extracted from N different channels (Cᵢ) with assigned capacity (cᵢ), **characterized in that** it envisages the availability of only the same information:
- basic unit (Uj), transition clock (CKT), time unit (T) and time unit clock (CKU);
- number N of channels (Cᵢ)
- capacity (cᵢ) of each channel (Cᵢ);
used during transmission for multiplexing the same flow (Fₜₓ) on the said channels (Cᵢ).

8. Use according to Claim 7, **characterized in that** the total capacity (c'tot) of the channels (Cᵢ) is less than the total maximum capacity of the channels (Cᵢ) themselves (c'tot < ctot).

9. Use according to Claim 8, **characterized in that** at the c_{d}^{th} transition clock edges, corresponding to the transmission dummy channel (C_{d}), no extraction of basic units (U_{jd}) is performed.

## Patentansprüche

1. Demultiplex- oder Multiplex-Verfahren zum Übertragen/Empfangen auf N Kanälen (Cᵢ) mit Kapazität (ci) eines Stroms (F_{TX}), umfassend, in einer Zeiteinheit (T), eine zugeordnete Menge von Basiseinheiten (Uⱼ) von digitalen Signalen nicht größer als die Summe (c_{TOT}) der Signalübertragungskapazitäten (cᵢ) der Kanäle (Cᵢ), **dadurch gekennzeichnet, dass** es die folgenden Schritte umfasst:
- Definieren von mindestens folgendem: einer Basiseinheit von Information (Uⱼ), einer Zeiteinheit (T), einem Zeiteinheitstakt (CKU) und einem Übergangstakt (CKT);
- Identifizieren des Kanals (Cₘₐₓ) mit maximaler Kapazität (cₘₐₓ);
- Definieren von N-1=M Status-Zählern (Vᵢ), die jeweils zu einem entsprechenden Kanal (Cᵢ) gehören, mit Ausnahme des Kanals (Cₘₐₓ) mit maximaler Kapazität (Cₘₐₓ);
- Definieren von N-1=M Status-Variablen (Sᵢ), die jeweils zu einem entsprechenden Kanal (Cᵢ) gehören, mit Ausnahme des Kanals (Cₘₐₓ) mit maximaler Kapazität (Cₘₐₓ);
- Definieren eines Überlaufwerts OF, der gleich der maximalen Kapazität (OF = cₘₐₓ) ist;
- Initialisieren des Systems bei einem Zeiteinheitstakt (CKU), wobei folgendes eingestellt wird:
alle Status-Zähler (Vᵢ) auf 0 und
alles Status-Variablen (Sᵢ) auf 1,
- Extrahieren bei jedem Übergangstakt (CKT) einer Basiseinheit (U_{J}) von aktueller Information aus dem Strom (F_{TX}) und:
- wenn mindestens eine Status-Variable Sᵢ gleich 1 ist, Zuordnen der Basiseinheit (U_{J}) von aktueller Information zu dem entsprechenden Kanal (Cᵢ) zur Übertragung; Nullsetzen der aktuellen Status-Variablen (Si=0);
- wenn alle Status-Variablen (Sᵢ) gleich Null (Si=0) sind, Zuordnen der aktuellen Basiseinheit (Uj) zu dem Kanal (Cₘₐₓ) mit maximaler Kapazität (cₘₐₓ) und Inkrementieren eines jeden Status-Zählers (Vᵢ) durch einen Wert gleich dem entsprechenden Kanalkapazitätswert (cᵢ), wobei ein Ergebnis Rᵢ (Rᵢ=Vᵢ+cᵢ) erhalten wird;
- für jeden Status-Zähler (Vᵢ), der den Überlaufwert OF (= cₘₐₓ) erreicht oder übersteigt:
- wird die entsprechende Status-Variable (Sᵢ) auf 1 eingestellt und ein berechneter Wert VC = Rᵢ-OV wird in den Zähler (Vᵢ) eingegeben;
- beim nächsten Übergangstakt (CKT), Wiederholen der Sequenz, Extrahieren der nächsten Basiseinheit (Uⱼ₊₁) von Information aus dem Strom (Fₜₓ) und Aktivieren eines Kanals (Cᵢ), auf der Grundlage der aktuellen Status-Variablen (Sᵢ);
- wenn keiner der Status-Zähler (Vᵢ) sich im Überlauf-Zustand befindet, wird beim nächsten Übergangstakt (CKT) die Sequenz wiederaufgenommen, wobei der aktuelle Kanals (Cᵢ) auf der Grundlage der aktuellen Status-Variablen (Sᵢ) aktiviert wird.

2. Verfahren nach Anspruch 1, **dadurch gekennzeichnet, dass** in dem Fall von mehreren Kanälen (Cᵢ) mit der gleichen maximalen Kapazität (Cₘₐₓ) einer zur Verwendung als Kanal (Cₘₐₓ) mit maximaler Kapazität gewählt wird, und die restlichen Kanäle (Cᵢ) so behandelt werden, als ob sie die gleich Kapazität wie diejenigen mit der geringeren Kapazität aufweisen.

3. Verfahren nach Anspruch 1, **dadurch gekennzeichnet, dass** wenn mehrere Status-Variablen (Si) gleichzeitig gleich 1 sind, eine hierarchische Regel zur Selektion auf der Grundlage der zunehmenden Indexwerte "i" definiert wird.

4. Verfahren nach Anspruch 1, **dadurch gekennzeichnet, dass** die Übertragungskapazität (c'ᵢ) von jedem Kanal (Cᵢ) bezüglich ihres maximalen Wertes (Cᵢ) reduziert ist und die gesamte Übertragungskapazität (c'_{TOT}) geringer ist als die maximal mögliche Kapazität (c_{TOT}).

5. Verfahren nach Anspruch 4, **dadurch gekennzeichnet, dass** der Übergangstakt (CKT), die Zeiteinheit (T) und der Zeiteinheitstakt (CKU) konstant sind.

6. Verfahren nach Anspruch 5, **dadurch gekennzeichnet, dass** es die folgenden weiteren Schritte umfasst:
- Definieren eines Dummy-Kanals (C_{d}) mit einer Übertragungskapazität c_{d}, die gleich der Differenz ist zwischen der gesamten maximalen Kapazität (c_{TOT}) der Übertragungskanäle (Cᵢ) und der aktuellen reduzierten gesamten Kapazität (c'_{TOT}) (c_{d}=c_{TOT}-c'_{TOT})
- Zuordnen zu dem Dummy-Kanal (C_{d}) von c_{d} Dummy-Basiseinheiten (U_{jd}), die aus dem reduzierten Strom (F'_{TX}) bei c_{d} Übergängen des Übergangstakts (CKT), extrahiert wurden, gemäß den Schritten des Verfahrens.

7. Verwendung eines Demultiplex- oder Multiplex-Verfahrens nach Anspruch 1 zur Rekonstruktion, während des Empfangs (GRX), eines Stroms (F_{TX}) mit den Daten, die aus N verschiedenen Kanälen (Cᵢ) mit zugeordneter Kapazität (cᵢ) extrahiert wurden, **dadurch gekennzeichnet, dass** es die Verfügbarkeit von nur der gleichen Informationen betrachtet:
- Basiseinheit (Uⱼ), Übergangstakt (CKT), Zeiteinheit (T) und Zeiteinheitstakt (CKU);
- Anzahl N von Kanälen (Cᵢ);
- Kapazität (cᵢ) von jedem Kanal (Cᵢ),
die während der Übertragung zum Multiplexen des gleichen Stroms (Fₜₓ) auf den Kanälen (Ci) verwendet werden.

8. Verwendung nach Anspruch 7, **dadurch gekennzeichnet, dass** die gesamte Kapazität (c'_{TOT}) der Kanäle (Cᵢ) geringer ist als die gesamte maximale Kapazität der Kanäle (Cᵢ) selbst (c'_{TOT} <c_{TOT}).

9. Verwendung nach Anspruch 8, **dadurch gekennzeichnet, dass** an den c_{d}-ten Übergangstakträndern, entsprechend dem Übergangs-Dummykanal (C_{d}), keine Extraktion von Basiseinheiten (U_{jd}) durchgeführt wird.

## Revendications

1. Procédé de démultiplexage ou de multiplexage permettant une émission/réception, sur N canaux (Cᵢ) de capacité (cᵢ) d'un flux (F_{TX}), comprenant, dans une unité de temps (T), une quantité affectée d'unités de base (Uj) de signaux numériques qui n'est pas supérieure à la somme (c_{TOT}) des uniques capacités de transmission (cᵢ) des canaux (Cᵢ), **caractérisé en ce qu'**il comprend les étapes suivantes consistant à :
- définir au moins : une unité de base d'informations (Uj), une unité de temps (T), une horloge d'unité de temps (CKU) et une horloge de transition (CKT) ;
- identifier le canal (Cₘₐₓ) de capacité maximale (cₘₐₓ) ;
- définir N - 1 = M compteurs d'état (Vᵢ), chacun étant associé à un canal correspondant (Cᵢ) à l'exception du canal (Cₘₐₓ) de capacité maximale (cₘₐₓ) ;
- définir N - 1 = M variables d'état (Sᵢ), chacune étant associée à un canal correspondant (Cᵢ) à l'exception du canal (Cₘₐₓ) de capacité maximale (cₘₐₓ) ;
- définir une valeur de dépassement de capacité OF, égale à ladite capacité maximale (OF = cₘₐₓ) ;
- initialiser le système à une horloge d'unité de temps (CKU), en instaurant :
tous les compteurs d'état (Vᵢ) à 0, et
toutes les variables d'état (Sᵢ) à 1,
- extraire, à chaque horloge de transition (CKT), une unité de base (Uj) d'informations courantes du flux (Fₜₓ), et :
- si au moins une variable d'état (Sᵢ) est égale à 1, affecter l'unité de base (Uj) d'informations courantes au canal correspondant (Cᵢ) à des fins de transmission ;
- mettre à zéro la variable d'état courante (Sᵢ = 0) ;
- si toutes les variables d'état sont égales à 0 (Sᵢ = 0), affecter l'unité de base courante (Uj) au canal (Cₘₐₓ) de capacité maximale (cₘₐₓ) et incrémenter chaque compteur d'état (Vᵢ) d'une valeur égale à la valeur de capacité de canal correspondante (cᵢ), en obtenant un résultat Rᵢ (Rᵢ = Vᵢ + cᵢ) ;
- pour chaque compteur d'état (Vᵢ) qui atteint, ou dépasse, la valeur de dépassement de capacité OF (= cₘₐₓ) :
- la variable d'état correspondante (Sᵢ) est instaurée à 1, et une valeur calculée VC = Rᵢ - OF est entrée dans le compteur (Vᵢ) ;
- à l'horloge de transition suivante (CKT), répéter la séquence, extraire l'unité de base suivante (U_{j + 1}) d'informations du flux (Fₜₓ) et activer un canal (Cᵢ), sur la base des variables d'état courantes (Si) ;
- si aucun des compteurs d'état (Vᵢ) n'est dans l'état de dépassement de capacité, à l'horloge de transition suivante (CKT), la séquence reprend en activant le canal courant (Cᵢ) sur la base des variables d'état courantes (Sᵢ).

2. Procédé selon la revendication 1, **caractérisé en ce que**, dans le cas de plusieurs canaux (Cᵢ) ayant la même capacité maximale (cₘₐₓ), l'un d'entre eux est choisi pour être utilisé en tant que canal de capacité maximale (Cₘₐₓ) et les canaux restants (Cᵢ) sont traités comme ayant la même capacité que les canaux de capacité inférieure.

3. Procédé selon la revendication 1, **caractérisé en ce que**, si plusieurs variables d'état (Sᵢ) sont simultanément égales à 1, une règle hiérarchique de choix, basée sur les valeurs d'indice d'augmentation croissante « i », est définie.

4. Procédé selon la revendication 1, **caractérisé en ce que** la capacité de transmission (c'ᵢ) de chaque canal (Cᵢ) est réduite par rapport à sa valeur maximale (cᵢ) et la capacité totale de transmission (c'_{TOT}) est inférieure à la capacité maximale possible (c_{TOT}) .

5. Procédé selon la revendication 4, **caractérisé en ce que** l'horloge de transition (CKT), l'unité de temps (T) et l'horloge d'unité de temps (CKU) sont constants.

6. Procédé selon la revendication 5, **caractérisé en ce qu'**il comprend les étapes supplémentaires consistant à :
- définir un canal fictif (C_{d}) de capacité de transmission c_{d} égale à la différence entre la capacité maximale totale (cₜₒₜ) des canaux de transmission et la capacité totale réduite (c'_{TOT}) (c_{d} = c_{TOT} - c'_{TOT}) ;
- affecter, au canal fictif (C_{d}) c_{d} unités de base fictives (Uj_{d}), extraites du flux réduit (F'_{TX}), aux c_{d} transitions de l'horloge de transition (CKT), conformément aux étapes du procédé.

7. Utilisation d'un procédé de démultiplexage ou de multiplexage selon la revendication 1, permettant la reconstruction, pendant une réception (GRX), d'un flux (Fₜₓ) des données extraites de N canaux différents (Cᵢ) de capacité affectée (cᵢ), **caractérisée en ce qu'**elle envisage la disponibilité uniquement des mêmes informations :
- une unité de base (Uj), une horloge de transition (CKT), une unité de temps (T) et une horloge d'unité de temps (CKU) ;
- le nombre N de canaux (Cᵢ),
- la capacité (cᵢ) de chaque canal (Cᵢ) ;
utilisés pendant une transmission de multiplexage du même flux (Fₜₓ) sur lesdits canaux (Cᵢ).

8. Utilisation selon la revendication 7, **caractérisée en ce que** la capacité totale (c'tot) des canaux (Cᵢ) est inférieure à la capacité maximale totale des canaux (Cᵢ) eux-mêmes (c'tot < ctot).

9. Utilisation selon la revendication 8, **caractérisée en ce que**, au niveau des flancs de la c_{d}^{ème} horloge de transition, correspondant au canal fictif de transmission (C_{d}), aucune extraction d'unité de base (Uj_{d}) n'est effectuée.
